# EUROPÄISCHE PATENTANMELDUNG

(11) **EP 4 086 928 A1**
(43) Veröffentlichungstag der Anmeldung: **09.11.2022**
(21) Anmeldenummer: 21172177.4
(22) Anmeldetag: 05.05.2021
(51) Int. Cl.: H01F 41/02, H01F 41/16, H02K 15/02

(54) **VERFAHREN ZUR HERSTELLUNG EINER PLANAREN STRUKTUR UND VORRICHTUNG**

(71) Anmelder: Siemens Aktiengesellschaft, 80333 München (DE)
(72) Erfinder: Denneler, Stefan, 81371 München (DE); Schuh, Carsten, 85598 Baldham (DE); Soller, Thomas, 94469 Deggendorf (DE)

(57) **Zusammenfassung**

Die Erfindung betrifft ein Verfahren zum Herstellen einer planaren Struktur (2) umfassend folgende Schritte,
- Drucken eines Grünkörpers (6) der Struktur (2) mittels eines Siebdruckverfahrens (4) auf eine Oberfläche (8) eines Trägersubstrat (10),
- Entfernen des Grünkörpers (6) vom Trägersubstrat (10),
- Wärmebehandlung des Grünkörpers zur Umwandlung des Grünkörpers in die planare Struktur, dadurch gekennzeichnet, dass
- eine Temperierung des Trägersubstrates (10) in der Form erfolgt, dass an seiner Oberfläche (8) unter dem Grünkörper (6) ein Temperaturgradient (14) erzeugt wird,
- der entlang einer Oberflächenebene (16) mindestens 0,5 K/mm beträgt und
- eine Ausdehnung (17) in der Oberflächenebene (16) von mindestens 10 mm aufweist.

## Beschreibung

Die Erfindung betrifft ein Verfahren zum Herstellen einer planaren Struktur nach dem Oberbegriff des Patentanspruchs 1 sowie eine Vorrichtung zur Durchführung des Verfahrens nach Patentanspruch 12.

Ein neues Verfahren zur Herstellung von planaren Strukturen, wie beispielsweise von Magnetblechen für elektrische Maschinen, stellt der Sieb- oder Schablonendruck dar. Hierbei wird, ausgehend von Metallpulvern, zunächst eine Druckpaste erzeugt, diese dann mittels einer Sieb- und/oder Schablonendrucktechnik zu einem Grünkörper in Dickschicht verarbeitet und anschließend der entstandene Grünkörper durch thermische Behandlung wie einer Entbinderung und einer Sinterung in ein metallisch strukturiertes Bauteil, im Weiteren als planare Struktur bezeichnet, überführt. Eine derartige planare Struktur kann beispielsweise ein Elektroblech sein, wobei eine Stapelung einer Vielzahl dieser Elektrobleche zu einem Magnetblechstapel für eine elektrische Maschine führt. Ein derartiges Verfahren ist beispielsweise in der WO 2020/099052A1 beschrieben.

Beim Formgebungsschritt mittels des Sieb- oder des Schablonendruckverfahrens wird der Grünkörper dabei auf ein Trägersubstrat gedruckt, wobei eine gute Benetzung und damit Adhäsion der Druckpaste auf dem Substrat wünschenswert ist, um ein fehlerfreies Druckbild zu gewährleisten. Vor der thermischen Prozessierung muss der Grünkörper dann vom Trägersubstrat abgelöst werden. Das Lösen des Verbundes zwischen Träger und Grünkörper stellt insofern einen kritischen Prozessschritt dar, als dass der typischerweise ca. 100 µm dicke Grünkörper bei zu großer oder unvorteilhafter Krafteinwirkung leicht Schaden erleiden kann. Der Grünkörper umfasst neben seinen funktionalen Bestandteilen, beispielsweise den Eisenpartikeln, im Wesentlichen eine polymerbasierte Matrix sowie Füllpartikel, sodass er zwar an sich handhabbar ist, aber eben eine gewisse Empfindlichkeit aufweist. Somit ist es leicht möglich, durch die eingebrachten mechanischen Spannungen Risse zu induzieren, die im weiteren Prozessablauf nachteilig in Bezug auf die Maßhaltigkeit oder die Fehlerfreiheit der daraus entstandenen planaren Struktur sind.

Die Aufgabe der Erfindung besteht darin, eine gegenüber dem Stand der Technik sicherere Prozesstechnik bereitzustellen, und die Ausschussrate bei der Herstellung von planaren Strukturen zu reduzieren.

Die Lösung der Aufgabe besteht in einem Verfahren mit den Merkmalen des Patentanspruchs 1 sowie in einer Vorrichtung zur Durchführung des Verfahrens nach Patentanspruch 12.

Das Verfahren nach Patentanspruch 1 umfasst folgende Schritte:
- Drucken eines Grünkörpers der Struktur mittels eines Siebdruckverfahrens auf eine Oberfläche eines Trägersubstrates
- Entfernen des Grünkörpers vom Trägersubstrat
- Wärmebehandlung des Grünkörpers zum Umwandeln des Grünkörpers in die planare Struktur.

Das Verfahren zeichnet sich dadurch aus, dass
- eine Temperierung des Trägersubstrats in der Form erfolgt, dass an seiner Oberfläche unter dem Grünkörper ein Temperaturgradient erzeugt wird,
- der entlang einer Oberflächenebene mindestens 0,5 K/mm beträgt und eine Ausdehnung in der Oberflächenebene von mindestens 10 mm aufweist.

Eine planare Struktur ist eine im Wesentlichen ebene, blechartige Struktur, die in ihrer Erstreckung in einer Ausbreitungsebene wesentlich größer ist als in ihrer Höhe. Unter einem Grünkörper wird dabei ein Vorkörper für eine spätere Wärmebehandlung verstanden. Ein Grünkörper ist an sich in der Regel mechanisch selbsttragend und mechanisch begrenzt belastbar. Durch die Wärmebehandlung insbesondere in Form eines Sintervorgang, bei dem anders als bei einem Schmelzvorgang einzelne Körner im Grünkörper durch Diffusionsprozesse eine zusammenhängende, stofflich verbundene Struktur ausbilden, wird der Grünkörper in einen Sinterkörper überführt. Nach der beschriebenen Wärmebehandlung und der damit eintretenden mechanischen Verfestigung wird von der planaren Struktur gesprochen.

Unter einem Siebdruckverfahren wird ein Verfahren verstanden, bei dem eine Paste beispielsweise mittels eines Rakels auf ein Substrat aufgebracht wird, wobei eine Schicht entsteht, die üblicherweise eine Dicke aufweist, die im Bereich zwischen 70 µm und 150 µm liegt. Die Paste wird nur auf bestimmte, nicht abgedeckte Bereiche, die mittels einer Schablone freigehalten sind, auf das Substrat gedruckt. In der Regel wird die Paste dabei durch ein Sieb gedruckt, was aber nicht zwingend notwendig ist. Ein Schablonendruck ohne Verwendung eines Siebes wird ebenfalls unter dem Begriff Siebdruckverfahren subsummiert.

Ein Trägersubstrat ist eine selbstragende Struktur mit einer möglichst glatten Oberfläche. Die Oberfläche ist dazu vorgesehen, den Grünkörper darauf zu drucken, wobei gegebenenfalls zwischen der Oberfläche und dem Grünkörper eine weitere Dünnschicht, beispielsweise in Form einer Haftvermittlungsschicht, aufgebracht sein kann. Auch in diesem Fall wird davon gesprochen, dass der Grünkörper auf die Oberfläche des Trägersubstrates aufgedruckt ist. Das Trägersubstrat kann neben einem die beschriebene Oberfläche aufweisenden Substratkörper auch noch weitere Elemente wie einen Rahmen, eine Trägerplatte und/oder Temperierelemente aufweisen, die entsprechend aneinandergefügt sind. Die Oberfläche des Trägersubstrates erstreckt sich in einer möglichst planaren Oberflächenebene.

Das beschriebene Verfahren ermöglicht es, den Grünkörper sicher und sauber von dem Trägersubstrat zu lösen. Durch den Temperaturgradienten entlang der Oberflächenebene zwischen Grünkörper und Oberfläche des Trägersubstrates werden aufgrund der unterschiedlichen Wärmeausdehnungskoeffizienten des Substrats und des Grünkörpers Zug- und/oder Druck- und/oder Scherspannungen erzeugt, die ein Ablösen des Grünkörpers vom Substrat unterstützen. Dabei ist durch die beschriebenen Wertebereiche bezüglich des Temperaturgradienten und bezüglich der Ausdehnung desselben die Intensität dieser Zug-, Druck- und Scherspannungen so gewählt, dass sie gerade ein Ablösen des Grünkörpers von der Oberfläche unterstützen, jedoch keinen Schaden für den Grünkörper an sich darstellen.

Der Temperaturgradient erstreckt sich auf eine Entfernung von mindestens 10 mm. Dabei gibt es unterschiedliche Möglichkeiten, diesen Temperaturgradienten auszugestalten. Zum einen ist es technisch gut umzusetzen, wenn der Temperaturgradient möglichst über die gesamte Oberflächenebene des Trägersubstrates unter dem Grünkörper verläuft. Man hat also einen Ausgangspunkt, beispielsweise den Punkt, an dem der Grünkörper auf dem Trägersubstrat in seiner flächigen Ausbreitung beginnt, und lässt den Temperaturgradienten bis zum gegenüberliegenden Ende des Grünkörpers verlaufen. Wenn der Grünkörper beispielsweise eine Ausdehnung von 200 mm aufweist, so weist der Temperaturgradient über die beschriebene Ausdehnung einen absoluten Betrag von 100 K. auf. Die Zug-, Druck- und Scherspannungen, die über diesen Temperaturbereich unter dem Grünkörper auftreten, sind dazu geeignet, diesen abzulösen. Grundsätzlich sind Temperaturgradienten zwischen 70 K und 150 K gut geeignet, die beschriebene Wirkung zu erzielen.

Ist der Grünkörper von seiner Beschaffenheit jedoch empfindlicher gegenüber den beschriebenen Zug-, Druck- und Scherspannungen, so kann es zweckmäßig sein, einen alternierenden Temperaturgradienten über den Verlauf des Grünkörpers in der Oberflächenebene zu generieren. Dieser alternierende Temperaturgradient sollte somit mindestens 10 mm betragen und nach mindestens weiteren 10 mm (also nach mindestens 20 mm Gesamtausbreitung) mit einem umgekehrten Vorzeichen weiterverlaufen, bis er nach beispielsweise weiteren 10 mm wieder das ursprüngliche Vorzeichen annehmen kann. Auf diese Weise werden lokale Zug-, Druck- und Scherspannungen aufgrund der unterschiedlichen Ausdehnungskoeffizienten induziert, wobei der absolute Temperaturgradient vergleichsweise klein gehalten wird. Auf diese Weise wird verhindert, insbesondere bei flächenmäßig groß ausgeprägten Grünkörpern, dass zu hohe absolute Temperaturschwankungen entlang des Temperaturgradienten auftreten, die ggf. bereits die inneren Eigenschaften des Grünkörpers beeinflussen können. Bei alternierenden Temperaturgradienten sind die genannten 10 mm Intervalle eine Untergrenze, innerhalb derer die gewünschte Wirkung noch technisch gut umsetzbar erzielt wird. Diese können auch höher gewählt werden, insbesondere können gerade bei alternierenden Temperaturgradienten diese auch höher als die beschriebenen 0,5K/mm, beispielsweise bei 1 K/mm liegen.

Es ist zweckmäßig, dass die Oberfläche des Trägersubstrats eine Mittenrauigkeit Ra aufweist, die kleiner als 0,5 µm, insbesondere bevorzugt kleiner als 0,2 µm und ganz besonders bevorzugt kleiner als 0,09 µm ist. Das Kürzel Ra für den arithmetischen Mittenrauwert (auch Mittenrauigkeit) ist nach DIN EN ISO 4287:2010 genormt. Zur Ermittlung dieses Messwertes wird die Oberfläche auf einer definierten Messstrecke abgetastet und sämtliche Höhen- und Tiefenunterschiede der Oberfläche aufgezeichnet. Nach der Berechnung des bestimmten Integrals dieses Rauheitsverlaufes auf der Messstrecke wird abschließend dieses Ergebnis durch die Länge der Messstrecke dividiert.

Eine sehr glatte Oberfläche des Trägersubstrates unterstützt die Entfernbarkeit des Grünkörpers von der Oberfläche zusätzlich zu den genannten Maßnahmen mittels Temperaturgradient. Je feiner die Oberfläche ist, umso leichter lässt sich der Grünkörper wieder entfernen. Anderseits ist es auch nötig, dass beim Drucken der Druckpaste diese auch auf der Oberfläche des Trägersubstrates anhaftet, sodass das Aufbringen einer Haftvermittlungsschicht zwischen der Oberfläche des Trägersubstrates und des darauf aufzudruckenden Grünkörpers zweckmäßig ist. Vor diesem Hintergrund ist das Merkmal nach Patentanspruch 1, wonach der Grünkörper auf die Oberfläche des Trägersubstrates gedruckt wird, auch so zu verstehen, dass zwischen der Oberfläche des Trägersubstrates und dem Grünkörper auch noch die beschriebene Haftvermittlungsschicht angeordnet sein kann.

Zur Erzeugung des Temperaturgradienten ist es zweckmäßig, dass unterhalb des Trägersubstrates Temperierelemente angeordnet sind. Diese Temperierelemente sind bevorzugt Peltier-Elemente. Grundsätzlich kann es allerdings auch zweckmäßig sein, unter dem Trägersubstrat oder im unteren Bereich des Trägersubstrates Kanäle anzuordnen, in dem ein Fluid zum Temperieren des Trägersubstrates fließt.

Ferner ist es zweckmäßig, dass nach dem Drucken des Grünkörpers ein Trocknungsschritt des Grünkörpers auf dem Trägersubstrat erfolgt. Das Trocknen des Grünkörpers auf dem Trägersubstrat erleichtert ebenfalls das Entfernen des Grünkörpers und ist ein Vorteil gegenüber dem Trocknen nach dem Entfernen des Grünkörpers.

Im Weiteren ist es zweckmäßig, wenn eine Mehrzahl von planaren Strukturen nach dem beschriebenen Verfahren hergestellt wird und diese zu einer dreidimensionalen Struktur übereinander gestapelt werden. Dies ist insbesondere zum Aufbau eines Blechpaketes für eine elektrische Maschine zweckmäßig. In diesem Fall sind die planaren Strukturen als Magnetbleche ausgestaltet.

Ein weiterer Bestandteil der Erfindung ist eine Vorrichtung zur Durchführung eines Verfahrens nach einem der vorhergehenden Ansprüche. Diese Vorrichtung umfasst ein Trägersubstrat mit einer Oberfläche zum Aufbringen eines Grünkörpers mittels eines Siebdruckverfahrens und eine der Oberfläche gegenüberliegende Substratunterseite, wobei an oder in der Substratunterseite Temperierelemente angeordnet sind. Die beschriebene Vorrichtung weist dieselben Vorteile auf, die bereits zu dem vorab erläuterten Verfahren vorgetragen sind. Dabei ist es zweckmäßig, wenn die Temperierelemente in Form von Peltier-Elementen oder in Form von Fluidkanälen ausgestaltet sind.

Weitere Vorteile der Erfindung und weitere Merkmale werden anhand der folgenden Figuren näher erläutert. Dabei zeigen:
Figur 1a) - c) den grundsätzlichen schematischen Ablauf der Herstellung einer planaren Struktur,
Figur 2a, b zwei mögliche Ausgestaltungsformen des Kastens II in Figur 1a) in detaillierterer Form,
Figur 3 eine Draufsicht auf ein Trägersubstrat mit einer Siebdruckschablone,
Figur 4 eine Draufsicht auf ein Trägersubstrat mit einem darauf gedruckten Grünkörper und die Darstellung eines Temperaturgradienten,
Figur 5 eine analoge Darstellung gemäß Figur 4 mit anders ausgestalteten Temperaturgradienten,
Figur 6 eine analoge Darstellung gemäß Figur 4 mit radial ausgestalteten Temperaturgradienten,
Figur 7 eine dreidimensionale Darstellung einer typischen planaren Struktur,
Figur 8 eine dreidimensionale Struktur, zusammengesetzt aus einer Vielzahl von planaren Strukturen in Form eines Blechpaketes für eine elektrische Maschine,
Figur 9 ein Blechpaket ähnlich wie in Figur 8 auf einer Welle montiert als Rotor für eine elektrische Maschine.

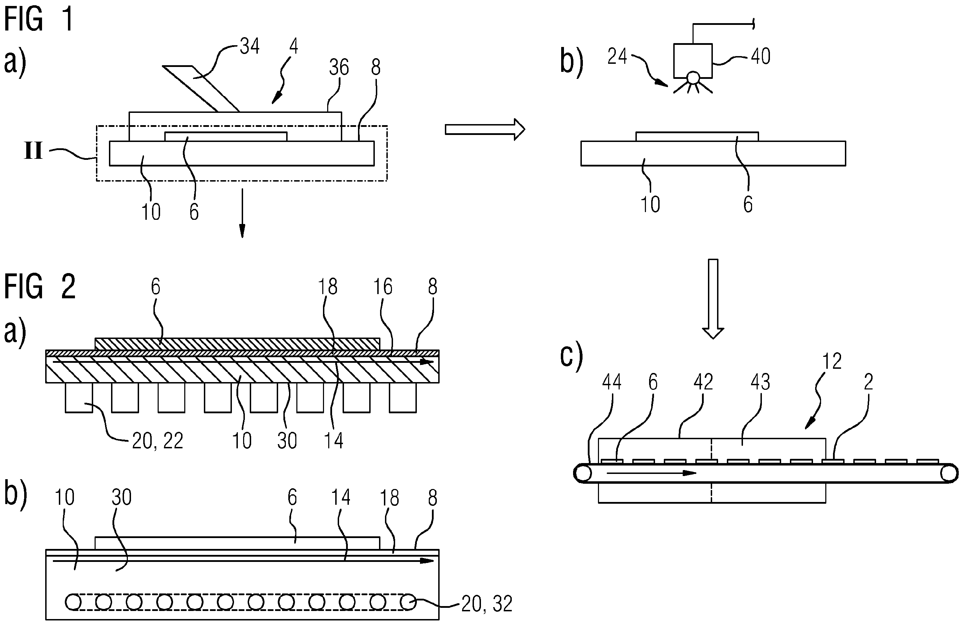

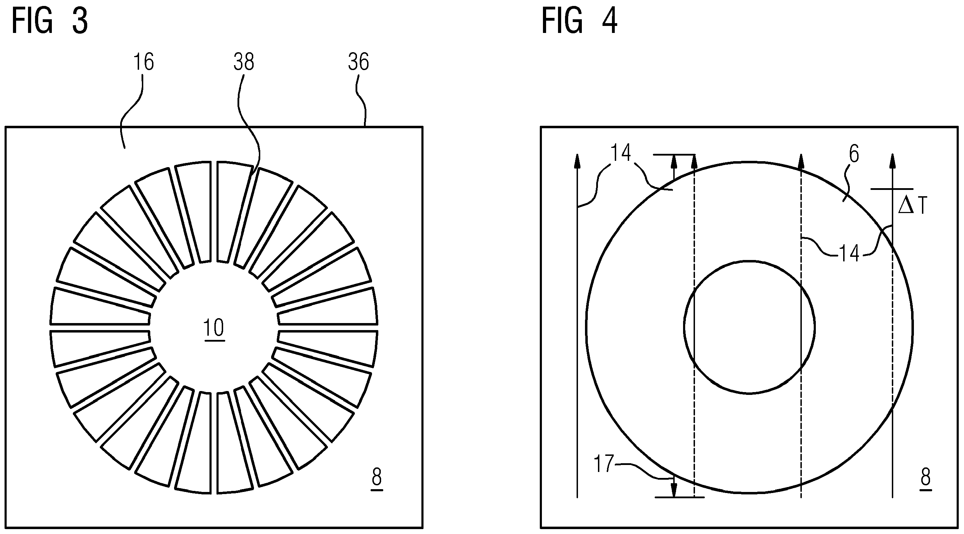

In der Figur 1 sind in den Teilfiguren a), b) und c) einzelne Verfahrensschritte zur Herstellung einer planaren Struktur 2 dargestellt. In Figur 1a) wird schematisch ein Siebdruckverfahren 4 beschrieben, wobei auf ein Trägersubstrat 10 mittels eines Rakels 34 ein Grünkörper 6 aufgedruckt wird. Hierbei wird eine hier nicht dargestellte Druckpaste durch das Rakel 4 durch eine Druckschablone 38 (vgl. Figur 3) gedruckt, sodass der Grünkörper 6 auf einer Oberfläche 8 des Trägersubstrates haftet. Die Druckschablone 38 ist dabei in einem Druckrahmen 36 gemäß Figur 3 montiert, wobei in den Druckrahmen 36 ein Sieb eingespannt sein kann, das hier nicht dargestellt ist. Das hier nicht dargestellte Sieb dient dazu, die Druckpaste gleichmäßig auf der Oberfläche 8 des Trägersubstrates 10 zu verteilen. Ob ein Sieb eingesetzt wird oder nicht, hängt von den rheologischen Eigenschaften der Druckpaste ab. Daher wird hier der Begriff "Schablonendruck" unter den Oberbegriff "Siebdruck" im Allgemeinen subsummiert.

Einerseits liegt dem beschriebenen Verfahren die Aufgabe zugrunde, das Abtrennen des gedruckten Grünkörpers möglichst zu vereinfachen. Zum anderen besteht aber auch die Notwendigkeit, dass der Grünkörper auf der Oberfläche 8 des Substrates beim Aufdrucken gut haftet. Hierfür wird je nach Druckpaste häufig eine Haftvermittlungsschicht 18 aufgebracht (vgl. Figuren 2a) und 2b)). Die Oberfläche 8 ist in dieser Ausgestaltung eine polierte Metalloberfläche, die eine Mittenrauigkeit Ra von 0,3 µm aufweist.

Im Weiteren wird gemäß Figur 1b) ein Trocknungsschritt 24 durchgeführt, wobei in dieser vorteilhaften Ausgestaltungsform über das Trägersubstrat 10 mit dem Grünkörper 6 eine Trocknungsvorrichtung 40 platziert wird. Bei der Trocknungsvorrichtung 40 kann es sich beispielsweise um ein Infrarotheizgerät handeln.

In Figur 1c) ist im Weiteren schematisch ein Wärmebehandlungsofen in Form eines Durchlaufofens 42 dargestellt. Der Durchlaufofen 42 weist dabei eine Heizkammer 43 auf, durch die die vom Trägersubstrat abgelösten Grünkörper 6 auf einem Förderband 44 befördert werden und dabei einem Wärmebehandlungsprozess in Form eines Sinterprozesses unterzogen werden. Nachdem die Grünkörper 6 die Heizkammer 43 verlassen haben, werden diese als planare Strukturen 2 bezeichnet. Der Durchlaufofen 42 kann auch Bereiche umfassen, die niedriger temperiert sind und zu einer Entbinderung oder zusätzlichen Trocknung des Grünkörpers beitragen können.

Zwischen den Teilfiguren 1b) und 1c) erfolgt ein Ablösen des Grünkörpers 6 von der Oberfläche 8 des Trägersubstrates 10. Auf die Mittel zum Ablösen des Grünkörpers 6 wird in Figur 2 in zwei verschiedenen Alternativen eingegangen. Dabei sind an oder in einer Substratunterseite 30 des Trägersubstrates 10 Temperierelemente 20 angebracht. In Figur 2a) sind die Temperierelemente 20 in Form von Peltier-Elementen 22 ausgestaltet, die an der Unterseite 30 angeordnet sind. Jedes der Peltier-Elemente 22 kann dabei in der Art angesteuert werden, dass von diesem eine ganz bestimmte Temperatur auf das Trägersubstrat 10 und im Weiteren an dessen Oberfläche 8 bzw. lotgerecht auf das Trägersubstrat 10 gesehen auf dessen Oberflächenebene 16 eingebracht werden kann. Da jedes Peltier-Element 22 durch eine elektrische Ansteuerung eine unterschiedliche Temperatur erzeugen kann, ist es möglich, in der Oberflächenebene 16 einen Temperaturgradienten 14 darzustellen. Die unterschiedlichen Temperaturgradienten 14 und ihre Ausgestaltung sind in den Figuren 4 - 6 beispielhaft erläutert.

Eine alternative Ausgestaltungsform der Temperierelemente 20 ist in Figur 2b) in Form von Fluidkanälen 32 dargestellt. Dabei sind die Fluidkanäle 32 in der Unterseite 30 des Trägersubstrates 10 integriert. Die Fluidkanäle 32 verlaufen dabei zum Beispiel mäanderförmig oder kreisförmig, je nach Ausgestaltung des Temperaturgradienten 14. So kann beispielsweise ein Temperaturgradient 14 durch Einleiten eines mit einer bestimmten Temperatur behafteten Fluids in den Fluidkanal 32 erzeugt werden, da das Fluid beim Durchlaufen des mäanderförmigen Fluidkanals 32 stetig Wärme an das Trägersubstrat 10 abgibt und somit zunehmend eine geringere Temperatur aufweist. Grundsätzlich ist es jedoch auch zweckmäßig, mehrere getrennte Kanalsysteme von Fluidkanälen 32 einzubringen, um Fluide mit unterschiedlichen Temperaturen gezielt einzuspeisen und so den Temperaturgradienten 14 in der Oberflächenebene 16 zu generieren.

In Figur 4 ist eine Form der Darstellung des Temperaturgradienten 14 gezeigt. Der Temperaturgradient 14 verläuft hierbei in der Oberflächenebene 16 des Trägersubstrates 10 von einem Ende des Grünkörpers 6 zu seinem anderen Ende. Hierbei handelt es sich um eine einzige gezielte Ausbreitungsrichtung des Temperaturgradienten 14. Bei relativ kleinen Durchmessern oder Abmessungen des Grünkörpers 6 kann bei einem Temperaturgradienten von 0,5 K/mm ein relativ hoher absoluter Temperaturgradient über die gesamte Oberflächenebene 16 erzielt werden (anzustreben sind dabei Temperaturgradienten zwischen 70 K und 150 K. Hat der Grünkörper 6 beispielsweise einen Durchmesser von 150 mm, so beträgt der Temperaturgradient 14 über seiner Abmessung 17 bei einem Gradienten von 0,5 K/mm 75° C. Weist die Temperatur der Oberfläche 8 unterhalb des Grünkörpers 6 am Beginn des Temperaturgradienten beispielsweise 20° C auf, so weist sie an dem gegenüberliegenden Ende eine Temperatur von 95° C auf. Beide Temperaturen sind dazu geeignet, entsprechende Zug-, Druck- bzw. Scherspannungen aufgrund der unterschiedlichen Ausdehnungskoeffizienten des Trägersubstrates 10 und des Grünkörpers 6 zu bewirken und ein Ablösen des Grünkörpers 6 von dem Trägersubstrat 10 zu erleichtern. Bei dem selben Grünkörper beträgt der absolute Betrag des Temperaturunterschiedes 105 K, wenn der Temperaturgradient 14 0,7 K/mm beträgt.

Ferner sind der genannte Temperaturgradient 14 und die dabei auftretenden Absoluttemperaturen für die mechanischen Eigenschaften des Grünkörpers 6 unbedenklich. Ist jedoch der Grünkörper größer, beispielsweise 250 mm im Durchmesser, so entsteht bei einem Gradienten von 0,5 K/mm ein Temperaturunterschied von 175° C. Dies könnte bereits zu Veränderungen der Struktur des Grünkörpers führen.

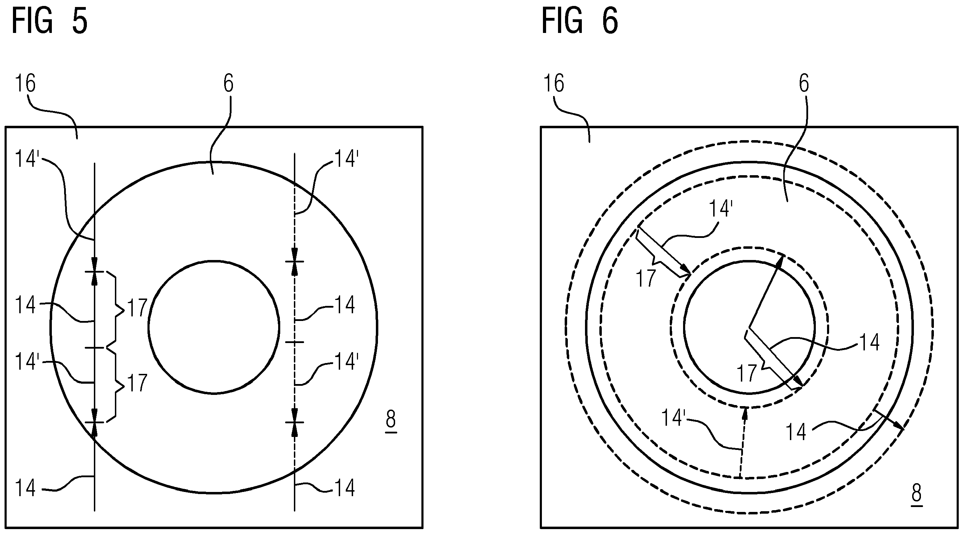

In diesem Fall ist es zweckmäßig, gemäß Figur 5 einen alternierenden Temperaturgradienten 14, 14' anzulegen, der eine Ausdehnung vorzugsweise jeweils zwischen 10 und 20 mm aufweist und anschließend mit geänderten Vorzeichen wie in Figur 5 gezeigt, in dieselbe Richtung weiterverläuft. Dieser alternierende Temperaturgradient 14, 14' hat den Vorteil, dass die absoluten Temperaturunterschiede auf der Substratoberfläche 8 und somit die thermische Belastung des Grünkörpers 6 geringer bleibt. Beträgt die Ausdehnung 17 des Gradienten 14 oder 14' 30 mm, so herrscht eine absolute Temperaturdifferenz von 30° K vor. Dieser Temperaturgradient 14 und 14' gemäß Figur 5 kann natürlich auch erhöht werden, sodass in der hier beschriebenen Ausdehnung 17 ebenfalls ein Temperaturgradient im Bereich zwischen 70 und 150° C entsteht, beispielsweise wenn der Temperaturgradient 4 K/mm beträgt. Die Auslegung des Temperaturgradienten 14 und 14' kann in allen hier beschriebenen Beispielen immer anhand der Ausdehnungskoeffizienten des verwendeten Materials für das Trägersubstrat 10 und des erzeugten Grünkörpers 6 adaptiert werden. Als Material für das Trägersubstrat wird üblicherweise eine polierte Metallscheibe, beispielsweise eine Edelstahlscheibe, verwendet.

Eine alternative Ausgestaltungsform des Temperaturgradienten 14 und 14' ist in Figur 6 dargestellt. Dieser Temperaturgradient 14 und 14' ist alternierend ausgestaltet wie in Figur 5, jedoch in Form von konzentrischen Kreisen, die vom Mittelpunkt des Grünkörpers zu dessen Außenseite verlaufen.

Die beschriebenen Temperaturgradienten unterstützen das sichere Abtrennen des Grünkörpers 6 vom Substrat. Zudem bedarf es aber in der Regel noch eine mechanische Unterstützung. Das Abtrennen des Grünkörpers 6 von der Oberfläche 8 des Trägersubstrates 10 kann neben dem beschriebenen Temperaturgradienten 14 auch durch weitere Hilfsmittel, beispielsweise einen Vakuumgreifer oder einen elektromagnetischen Greifer sowie durch eine Saugrolle oder durch eine Abschälvorrichtung wie zum Beispiel einen Draht oder ein Messer unterstützt werden.

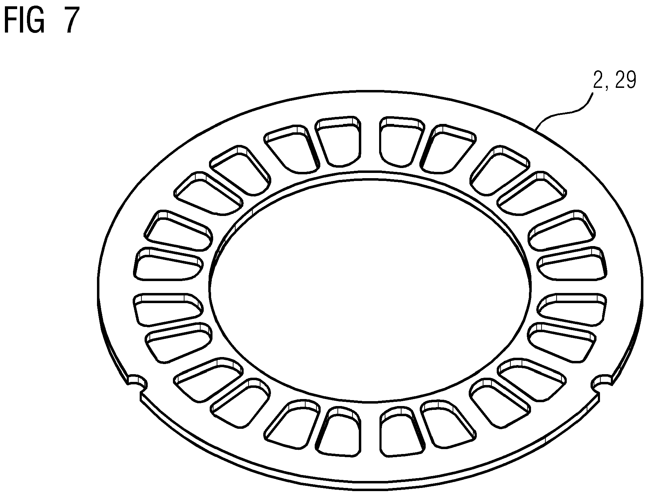

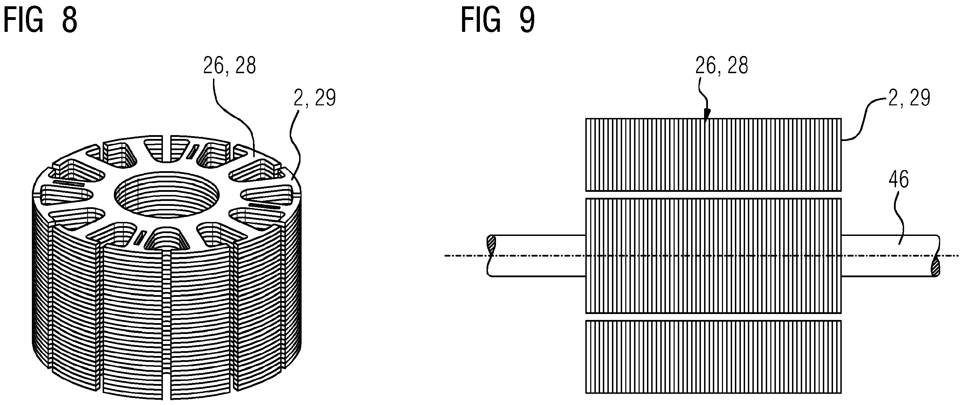

In Figur 7 ist exemplarisch eine nach dem beschriebenen Verfahren hergestellte planare Struktur 2 dargestellt, die in Form eines Magnetbleches 29 ausgestaltet ist. Eine Vielzahl dieser Magnetbleche 29 wird, wie in Figur 8 dargestellt ist, zu einer dreidimensionalen Struktur 26 in Form eines Blechpaketes 28 zusammengestapelt. Ein derartiges Blechpaket 28 wiederum kann auf eine Welle 46 montiert werden und bildet somit den Rotor einer nicht dargestellten elektrischen Maschine.

### Bezugszeichenliste

- 2: planare Struktur
- 4: Siebdruckverfahren
- 6: Grünkörper
- 8: Oberfläche
- 10: Trägersubstrat
- 12: Wärmebehandlung
- 14: Temperaturgradient
- 16: Oberflächenebene
- 17: Ausdehnung T-Gradient
- 18: Haftvermittlungsschicht
- 20: Temperierelemente
- 22: Peltier-Element
- 24: Trocknungsschritt
- 26: dreidimensionale Struktur
- 28: Blechpaket
- 29: Magnetblech
- 30: Substratunterseite
- 32: Fluidkanäle
- 34: Rakel
- 36: Druckrahmen
- 38: Druckschablone
- 40: Trocknungsvorrichtung
- 42: Durchlaufofen
- 43: Heizkammer
- 44: Förderband
- 46: Welle

## Patentansprüche

1. Verfahren zum Herstellen einer planaren Struktur (2) umfassend folgende Schritte,
- Drucken eines Grünkörpers (6) der Struktur (2) mittels eines Siebdruckverfahrens (4) auf eine Oberfläche (8) eines Trägersubstrats (10),
- Entfernen des Grünkörpers (6) vom Trägersubstrat (10),
- Wärmebehandlung des Grünkörpers zur Umwandlung des Grünkörpers in die planare Struktur, **dadurch gekennzeichnet, dass**
- eine Temperierung des Trägersubstrates (10) in der Form erfolgt, dass an seiner Oberfläche (8) unter dem Grünkörper (6) ein Temperaturgradient (14) erzeugt wird,
- der entlang einer Oberflächenebene (16) mindestens 0,5 K/mm beträgt und
- eine Ausdehnung (17) in der Oberflächenebene (16) von mindestens 10 mm aufweist.

2. Verfahren nach Anspruch 1, **dadurch gekennzeichnet, dass** sich der Temperaturgradient (14) über die vom Grünkörper (6) bedeckte Oberfläche (8) erstreckt.

3. Verfahren nach Anspruch 1, **dadurch gekennzeichnet, dass** der Temperaturgradient (14) alterniert und nach einer Erstreckung von mindestens 10 mm in der Oberflächenebene (16) ein zweiter Temperaturgradient (14') erzeugt wird, der mit umgekehrten Vorzeichen zum ersten Temperaturgradienten (14) verläuft.

4. Verfahren nach Anspruch 1 bis 3, **dadurch gekennzeichnet, dass** zwischen der Oberfläche (8) und dem Grünkörper (6) eine Haftvermittlungsschicht (18) aufgebracht ist.

5. Verfahren nach einem der vorhergehenden Ansprüche, **dadurch gekennzeichnet, dass** die Oberfläche (8) des Trägersubstrats (10) eine Mittenrauigkeit Ra aufweist, die kleiner als 0,5 µm ist.

6. Verfahren nach Anspruch 5, **dadurch gekennzeichnet, dass** die Mittenrauigkeit Ra kleiner als 0,2 µm, besonders bevorzugt kleiner als 0,09 µm ist.

7. Verfahren nach einem der vorhergehenden Ansprüche, **dadurch gekennzeichnet, dass** unterhalb des Trägersubstrates Temperierelemente (20) zur Erzeugung des Temperaturgradienten (14) angeordnet sind.

8. Verfahren nach Anspruch 6, **dadurch gekennzeichnet, dass** die Temperierelemente (20) Peltier-Elemente (22) sind.

9. Verfahren nach einem der vorhergehenden Ansprüche, **dadurch gekennzeichnet, dass** nach dem Drucken des Grünkörpers (6) ein Trocknungsschritt (24) des Grünkörpers (6) auf dem Trägersubstrat (10) erfolgt.

10. Verfahren zur Erzeugung einer dreidimensionalen Struktur, wobei eine Mehrzahl von planaren Strukturen (2), hergestellt mittels eines Verfahrens nach einem der Ansprüche 1 bis 9 zu einer dreidimensionalen Struktur (26) übereinandergestapelt werden.

11. Verfahren nach Anspruch 10, **dadurch gekennzeichnet, dass** die dreidimensionale Struktur (26) ein Blechpaket (28) für eine elektrische Maschine ist.

12. Vorrichtung zur Durchführung eines Verfahrens nach einem der vorhergehenden Ansprüche, umfassend ein Trägersubstrat (10) mit einer Oberfläche (8) zum Aufbringen eines Grünkörpers (6) mittels eines Siebdruckverfahrens (4) und einer der Oberfläche (8) gegenüber liegenden Substratunterseite (30), wobei an oder in der Substratunterseite (30) Temperierelemente (20) angeordnet sind.

13. Vorrichtung nach Anspruch 12, **dadurch gekennzeichnet, dass** Temperierelemente Peltierelemente (22) oder Fluidkanäle (32) sind.
